# EUROPEAN PATENT APPLICATION

(11) **EP 1 808 209 A2**
(43) Date of publication of application: **18.07.2007**
(21) Application number: 06019109.5
(22) Date of filing: 12.09.2006
(51) Int. Cl.: A63F 13/10

(54) **An apparatus, a method and a computer program product for processing a video game**

(30) Priority: 15.09.2005 JP 2005269059
(71) Applicant: Kabushiki Kaisha Square Enix (also trading as Square Enix Co., Ltd.), Tokyo 151-8544 (JP)
(72) Inventor: Itou, Hiroyuki, Shibuya-ku Tokyo 151-8544 (JP)
(74) Representative: Grünecker, Kinkeldey, Stockmair & Schwanhäusser Anwaltssozietät

(57) **Abstract**

A system in which details regarding an action for each of multiple player characters may be preset easily and accurately is provided. In a gambit battle action determining process, a control section determines whether an action condition in a gambit whose gambit number is "K" is met or not (Step S142). The control section determines whether an action target indicated by the gambit whose gambit number is "K" exists or not, in which a status condition thereof is met. In the case where the action condition is not met, a gambit for a next gambit number is determined. In the case where the action condition is met, it is determined that an action content in the gambit is carried out against an action target indicated by the gambit (Step S143).

## Description

### CROSS-REFERENCE TO RELATED APPLICATION

The present disclosure relates to subject matter contained in Japanese Patent Application No. 2005-269059, filed on September 15, 2005, the disclosure of which is expressly incorporated herein by reference in its entirety.

### BACKGROUND OF THE INVENTION

1. Field of the Invention

The present invention relates to a technique to control progress of a video game by displaying a player character on an image display screen of an image display apparatus and controlling an action of the player character displayed on the image display screen in response to an operation by a player.

2. Description of the Related Art

Heretofore, various kinds of so-called role playing games (RPG: a game in which a player plays a role of a character in a world of the game, and accomplishes a predetermined object while enjoying a process whereby the character grows through various experiences) have been provided.

There are some RPGs in which an action content of each of friend characters including a player character, who act (for example, attack, recover, supplementarily defend, and supplementarily attack) in accordance with an operation by a player, can be preset. In this case, an action to be carried out is determined on the basis of setup content when battling an enemy character, and the player character is caused to carry out the determined action (for example, see Japanese Patent Application Publication No. 2001-157780 and "Dragon Quest IV 'The Guided Ones' Official Guide Book" (Enix Corporation, January 11, 2002, Volume II, Knowledge edition, pp. 196-197)).

Japanese Patent Application Publication No. 2001-157780 discloses that a degree of carrying out predetermined strategy items such as "use of a magic for attack" and "timing (or space) with an enemy", can be set within the range of "modest" to "go for it", and each of the strategy items is carried out to the degree set by the player.

Further, the Dragon Quest IV Official guide book (noted above) discloses a system where any one of multiple kinds of strategies prepared in advance such as "go ahead!', "keep it up" and "don't use a magic" can be set, and an action of each friend character may be determined on the basis of the strategy set by the player during battle.

According to the techniques described above, a player just can set strategy or a degree at which a strategy item of each friend character may be carried out, but the player cannot determine details regarding an action of the character. Thus, any friend player character may execute an action that the player did not intend, and therefore, there is a problem that such situations may cause a user (player) to become frustrated or lose interest in the RPG.

On the other hand, since there are numerous possible action patterns for each friend character, it is impossible to simply set details regarding each action content. Therefore, there is a problem that it is difficult to easily set an action content of each friend character in detail.

### SUMMARY OF THE INVENTION

It is an object of the present invention to solve the problems described above and to provide an apparatus, a method and a computer program product for processing a video game by which it is possible to easily and accurately set details regarding an action for each player character, and this makes it possible to increase or maintain a user's interest in a game.

In order to achieve the above object, an aspect of the present invention is directed to an apparatus that causes an image display apparatus (for example, a display device 50) to display a player character of a video game on an image screen (for example, an image display screen 51) of the image display apparatus. In this case, the apparatus (for example, a video game apparatus 100, including a video game apparatus main body 10) controls progress of the video game by controlling an action of the player character to be displayed on the image screen in accordance with an operation by a player. The apparatus of the present invention includes a character action information receiver (for example, a module in a control section 11 to carry out processes at Steps S127, S131, and S135 executed by a control section 11 and a graphics processor 15) that receives character action information (for example, a gambit) in which an action condition, including an action target of the player character, corresponds to an action content of the player character.

The apparatus also includes a character action information setter (for example, a module in the control section 11 to carry out a process at Step S137) that sets the character action information received by the character action information receiver.

The apparatus also includes an action content determiner (for example, a module in the control section 11 to carry out a process at Step S105) that determines an action content to be carried out by the player character in accordance with the character action information set by the character action information setter.

The apparatus also includes an action content executer (for example, a module in the control section 11 to carry out a process at Step S157) that causes the player character to carry out the action content determined by the action content determiner.

In this case, the action content determiner determines whether an action condition indicated by the character action information is met (for example, Step S142). In the case where the action condition is met (for example, "Yes" at Step S142), the action content determiner determines an action content to be carried out by the player character against the action target, the action content corresponding to the action condition (for example, Stop S143).

Since the apparatus may have the configuration described above, it becomes possible to easily and accurately set details regarding an action for each character, thereby making it possible to heighten a user's interest in the game.

It is preferable that the character action information receiver receives multiple kinds of character action information in which each kind of character action information is assigned an order of priority (for example, Steps S127, S131 and S135), the character action information setter sets the multiple kinds of character action information for the player character on the basis of the assigned order of priority (for example, Step S137), and the action content determiner determines an action content that is to be carried out by the player character, the action content being indicated by the character action information having the highest assigned priority and whose action condition is met (for example, Steps S141 to S145). By constructing the apparatus in this manner, it becomes possible to easily and accurately set the action for the character in more detail, thereby making it possible to further heighten a user's interest in the game.

It is preferable that the apparatus further includes: an upper limit number memory (for example, a RAM 12) that stores an upper limit number of settable character action information; and an upper limit number incrementer (for example, the control section 11) that increments the upper limit number stored in the upper limit number memory on the basis of a privilege (for example, score, item and money). The privilege is supplied to the player character in accordance with progress of the video game. In this case, the character action information receiver receives multiple kinds of character action information up to the upper limit number stored in the upper limit number memory (for example, Steps S127, S131 and S135). By constructing the apparatus in this manner, it becomes possible to increase the number of settable character action information in accordance with progress of the game, and to accurately preset the action for the character in more detail in accordance with the progress of the game.

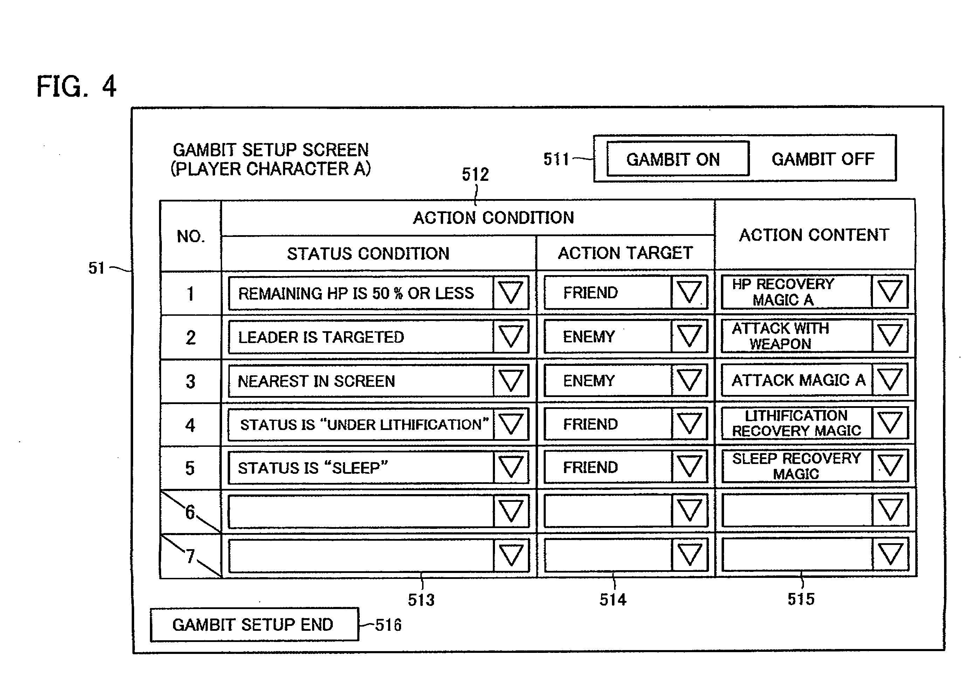

It is preferable that the action condition may be constituted from a combination of an action target and a status condition indicating a condition of a current status of the action target on the video game (for example, see FIG. 4). It is also preferable that the apparatus further includes a status condition memory (for example, the RAM 12) that stores at least one status condition receivable by the character action information receiver; and a status condition incrementer (for example, the control section 11) that increments the status conditions stored in the status condition memory on the basis of a privilege that is to be supplied to the player character in accordance with progress of the video game. By constructing the apparatus in this manner, it becomes possible to increase the kinds of settable status conditions in accordance with progress of the game, and to accurately preset the action of the character in more detail in accordance with the progress of the game.

It is preferable that the status condition includes, for example, at least one of a residual amount and a maximum amount of hit points for the action target, a residual amount and a maximum amount of magic points for the action target, defensive power for the action target, offensive power for the action target, and a status effect that influences the action target.

It is preferable that the action target includes, for example, at least one of a main player character whose action is directly controlled in accordance with an operation by a player, at least one sub player character whose action is indirectly controlled in accordance with an operation by the player, and an enemy character.

It is preferable that multiple player characters exist in the video game, and the character action information setter sets character action information for each of the multiple player characters, and that the character action information receiver receives an action content to be allowed to each of the multiple player characters (for example, Steps S127, S131 and S135). By constructing the apparatus in this manner, it is possible to easily and accurately set details regarding the action for each of the multiple player characters, thereby making it possible to further heighten a user's interest in the game.

It is preferable that the action content includes, for example, at least one of an attack on the action target with a tool, an attack on the action target with a magic, defense from an action by the action target, and a recovery of the action target.

It is preferable that the video game includes a role playing game. By constructing the apparatus in this manner, it is possible to easily and accurately preset the details regarding the action for the character on the role playing game, thereby making it possible to heighten a user's interest in the game.

Further, according to another aspect of the present invention, the present invention is directed to a method of processing a video game by causing an image display apparatus (for example, the display device 50) to display a player character of the video game on an image screen (for example, the image display screen 51) of the image display apparatus. In this case, the method controls progress of the video game by controlling an action of the player character to be displayed on the image screen in accordance with an operation by a player.
The method of the present invention includes receiving character action information (for example, a gambit) in which an action condition, including an action target of the player character, corresponds to an action content of the player character (for example, Steps S127, S131 and S135).

The method also includes setting the received character action information (for example, Step S137).

The method also includes determining whether the action condition indicated by the set character action information is met or not, and determining an action content to be carried out by the player character against the action target in the case where the action condition is met (for example, Steps S142 and S143). In this case, the action content corresponds to the action condition.

The method also includes causing the player character to carry out the determined action content (for example, Step S157).

Moreover, according to still another aspect of the present invention, the present invention is directed to a computer program product for processing a video game. In this case, progress of the video game is controlled by causing an image display apparatus (for example, the display device 50) to display a player character of the video game on an image screen (for example, the image display screen 51) of the image display apparatus, and controlling an action of the player character to be displayed on the image screen in accordance with an operation by a player. The computer program product of the present invention causes a computer (for example, the video game apparatus 100, including the video game apparatus main body 10) to execute steps including receiving character action information (for example, a gambit) in which an action condition, including an action target of the player character, corresponds to an action content of the player character (for example, Steps S127, S131 and S135).

The steps also include setting the received character action information (for example, Step S137).

The steps also include determining whether the action condition indicated by the set character action information is met or not, and determining an action content to be carried out by the player character against the action target in the case where the action condition is met (for example, Steps S142 and S143). In this case, the action content corresponds to the action condition.

The steps also include causing the player character to carry out the determined action content (for example, Step S157).

According to the present invention, it becomes possible to easily and accurately set details regarding an action for each of the player characters, thereby making it possible to heighten a user's interest in the game.

### BRIEF DESCRIPTION OF THE DRAWINGS

The foregoing and other objects, features and advantages of the present invention will become more readily apparent from the following detailed description of preferred embodiments of the present invention that proceeds with reference to the appending drawings.

FIG. 1 is a block diagram that illustrates a configuration of a video game apparatus to which an embodiment of the present invention is applied.

FIG. 2 is a flowchart that illustrates an example of a main process according to an aspect of the present invention.

FIG. 3 is a flowchart that illustrates an example of a gambit setup interrupting process.

FIG. 4 is an explanatory drawing that shows an example of a gambit setup screen displayed on an image display screen.

FIG. 5 is an explanatory drawing that shows an example of a status condition list.

FIG. 6 is an explanatory drawing that shows an example of an action target list.

FIG. 7 is an explanatory drawing that shows an example of an action content list.

FIG. 8 is a flowchart that illustrates an example of a gambit battle action determining process.

FIG. 9 is a flowchart that illustrates an example of an action executing process.

### DETAILED DESCRIPTION OF THE INVENTION

Preferred embodiments of an apparatus, a method and a computer program product for processing a video game according to the present invention will now be described in detail with reference to the appending drawings.

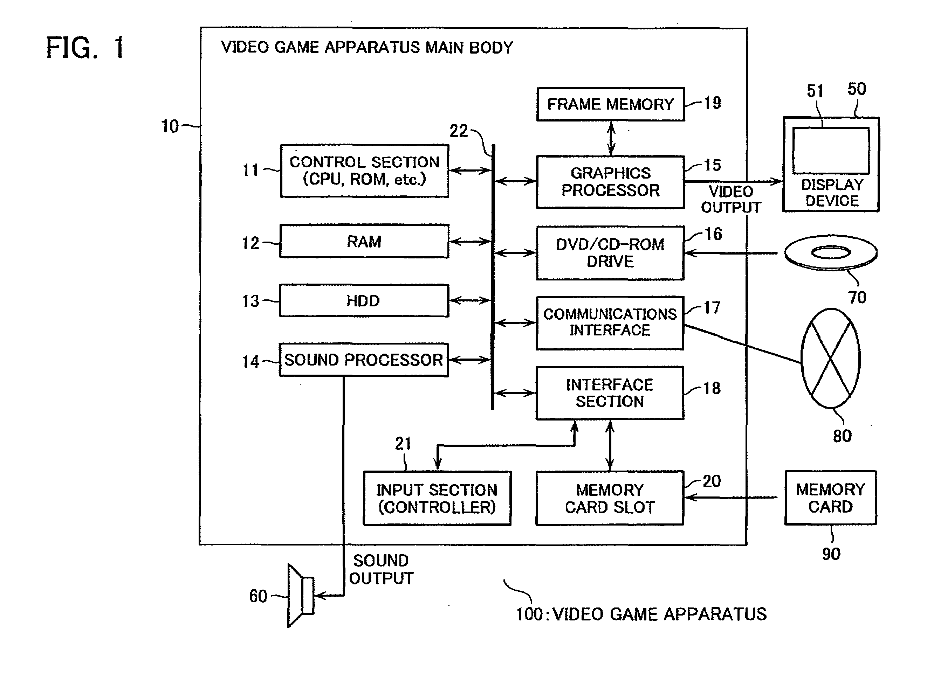

FIG. 1 is a block diagram that illustrates a configuration of a video game apparatus 100 to which an embodiment of the present invention is applied.

As shown in FIG. 1, a video game apparatus 100 of this embodiment includes a video game apparatus main body 10, a display device 50, and a sound output device 60. The video game apparatus main body 10 may be constituted, for example, from a video game system available on the market, for example. Further, the display device 50 may be constituted from, for example, a television apparatus, a liquid crystal display device or the like, and is provided with an image display screen 51. However, the skilled artisan will readily appreciate that any other display device capable of conveying a visually perceivable image may be used instead, such as a micromirror display device, an image projection device, a holographic projection device, a head-mounted display device, or the like without departing from the spirit or scope of the present invention.

The video game apparatus main body 10 includes a control section 11, a RAM (Random Access Memory) 12, a HDD (hard disk drive) 13, a sound processor 14, a graphics processor 15, a DVD/CD-ROM drive 16, a communications interface 17, an interface section 18, a frame memory 19, a memory card slot 20, and an input section (controller) 21.

Each of the control section 11, the RAM (Random Access Memory) 12, the HDD (Hard Disc Drive) 13, the sound processor 14, the graphics processor 15, the DVD/CD-ROM drive 16, the communications interface 17 and the interface section 18 is connected to an internal bus 22.

The control section 11 includes a CPU (Central Control Unit), ROM (Read Only Memory) and the like, and carries out control of the whole video game apparatus 100 in accordance with control programs stored in the HDD 13 and/or a storage medium 70. The control section 11 has an internal timer used to generate timer interruptions. The RAM 12 is used as a work area for the control section 11. The HDD 13 is a storage region for storing the control programs and various data.

The sound processor 14 is connected to the sound output device 60 constituted from a speaker, for example. The sound processor 14 outputs a sound signal to the sound output device 60 in accordance with a sound outputting command from the control section 11 that carries out a process according to the control programs. In this regard, the sound output device 60 may be embedded in the display device 50 or the video game apparatus main body 10. Further, the sound output device 60 may be a head-mountable or ear-mountable speaker, or it may be of the type that induces vibrations in a solid or liquid material so as to generate audible signals, such as a device that may be affixed to a structural wall so as to cause the wall to serve as a sound generation device.

The graphics processor 15 is connected to the display device 50 having the image display screen 51 on which an image is displayed. The graphics processor 15 develops an image on the frame memory 19 in accordance with a drawing command (graphics command) from the control section 11, and outputs video signals for displaying the image on the image display screen 51 to the display device 50. A switching time for images to be displayed according to the video signals is set to 1/30 seconds per frame, 1/25 seconds per frame, or any other appropriate display rate, for example.

A storage medium 70 such as a DVD-ROM medium and a CD-ROM medium in which control programs for a game are stored is mounted in the DVD/CD-ROM drive 16. The DVD/CD-ROM drive 16 carries out a process for reading out various data such as control programs from the storage medium 70.

The communications interface 17 is connected to a communication network 80 such as the Internet, a local area network (LAN), a wide area network (WAN), or the like, in a wireless or wired manner. The video game apparatus main body 10 carries out communication with, for example, another computer via the communication network 80 using a communication function of the communications interface 17.

Each of the input section 21 and the memory card slot 20 is connected to the interface section 18. The interface section 18 causes the RAM 12 to store instruction data from the input section 21 on the basis of an operation of the input section 21 by a player of the video game apparatus 100. In response to the instruction data stored in the RAM 12, the control section 11 carries out various arithmetic processing.

The input section 21 may be constituted from, for example, a controller for a video game apparatus 100, and may have multiple operational buttons (operational keys) such as a directional instruction key and various selection keys. However, other types of controller devices may be used without departing from the scope and/or spirit of the present invention. In the present embodiment, when a player (a user of the video game apparatus 100) operates the directional instruction key, a player character (which will be described later in more detail) is moved virtually. Further, an operation of the various selection keys by the player causes the control section 11 to generate various commands (such as a battle command) and to carry out a predetermined process according to a scene displayed on the image display screen 51. In this regard, the directional instruction key may be used to cause a cursor to move on the image display screen 51, and the like.

Further, the interface section 18 carries out, according to commands from the control section 11, a process to store data indicative of the progress of the game stored in the RAM 12 into the memory card 90 installed in the memory card slot 20, a process to read out data on the game stored in the memory card 90 at the time of suspending the game and to transfer such data to the RAM 12, and the like.

Various data such as control program data for performing the game with the video game apparatus 100 are stored in, for example, the storage medium 70. The various data such as the control program data stored in the storage medium 70 are read out by the DVD/CD-ROM drive 16 in which the storage medium 70 is installed, and the data thus read out are loaded into the RAM 12. The control section 11 carries out, in accordance with the control program loaded in the RAM 12, various processes such as a process to output a graphics command to the graphics processor 15, and a process to output a sound outputting command to the sound processor 14. In this regard, the interim data generated in response to the progress of the game (for example, data indicative of scoring of the game, the state of a player character and the like) are stored in the RAM 12, which is used for a work memory while the control section 11 carries out processing.

According to an aspect of the present embodiment, an exemplary three-dimensional video game is provided that may include multiple characters, including a player character (that is, a character that moves in accordance with an operation of the input section 21 by the player), which move on a field provided in a virtual three-dimensional space, by which the game proceeds. In this regard, it may be assumed that the virtual three-dimensional space in which the field is formed is indicated by coordinates of the world coordinate system. The field may be defined by multiple surfaces, and coordinates of vertexes of the respective constituent surfaces may be shown as characteristic points.

Next, operation of the video game apparatus 100 according to the present embodiment will now be described.

Here, in order to simplify the explanation of the exemplary embodiment, it is assumed that only a single player character and multiple non-player characters (which are moved in accordance with control of the video game apparatus 100 (more specifically, control of the control section 11)) exist as objects which are movable in the virtual three-dimensional space. Moreover, the explanation for any process other than the processes relating to the present invention is omitted. In this regard, in the present embodiment, video game control for a RPG may be carried out.

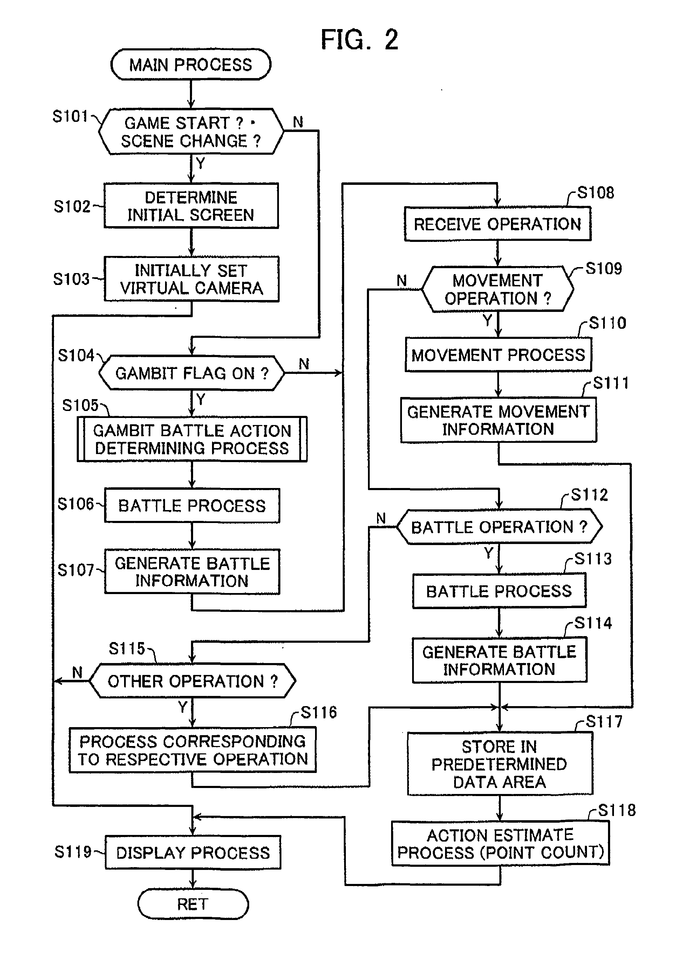

FIG. 2 is a flowchart that illustrates an example of a main process of the video game apparatus 100 according to the present embodiment. The main process is a process for generating an image for one frame and a process required for the control of the video game. The main process is carried out in accordance with timer interruption at every 1/30 second. It is to be noted that timing of "at every 1/30 second" is one example. However, the main process may, instead, be carried out in accordance with a timer interruption at every single field period (every 1/60 second for NTSC signals, or 1/50 second for PAL signals) or at every two frame periods (for example, every 1/15 second).

In the present embodiment, a game (that is, an RPG game) proceeds in a common field (that is, in a single field where a battle field and a movement field are not distinguished from each other) in which various actions are allowed (such as a battle action and a movement action) including the movement of the player character and a battle by the player character. In the case where a predetermined object is accomplished in the field, one stage may be terminated and the processing may proceed to another stage carried out in a next field. Further, in the present embodiment, the same time base is applied to the respective characters existing in such a field. Once a NPC (non-player character) enters a stage in the field, the NPC may move or stands still on the field in accordance with the same time base until NPC's hit point (which is a value indicating life force, and hereinafter, referred to simply as "HP") thereof becomes zero. In this case, a portion displayed on the image display screen 51 as a character image is a portion that exists within a field of view of a virtual camera in the field.

In the main process, the control section 11 determines whether an instruction to start a game is generated by the operation of the input section 21 by means of the player or not in the case where the state is still before the game start. Alternatively, the control section 11 determines whether the state becomes timing to change the scene (for example, change the field) or not in the case where the state is during execution of the game (Step S101). The timing to change the scene means, for example, timing in which a virtual three-dimensional space illustrating a new scene is displayed on the image display screen 51 in order to finish the scene that has been displayed on the image display screen 51 until now (for example, a scene displayed by a virtual three-dimensional space, and a scene displayed by a directorial moving image) and to switch the displayed scene to the new scene.

In the case where it is determined that an instruction to start a game is generated, or where the state becomes the timing to change the scene ("Yes" at Step S101), the control section 11 determines an initial screen that is to be displayed (for example, an initial screen to be displayed at the time of start of the game, or an initial screen to be displayed at the time of a change in the displayed scene) in accordance with the control program (Step S102). In this case, various data such as image data used for the game and the characters are stored in the storage medium 70. At Step S102, an initial display position of the player character in an initial screen or a scene after change (for example, a new stage), a non-player character or non-player characters to be displayed, an initial display position of each of the non-player characters to be displayed and the like are determined in accordance with the control program.

Subsequently, the control section 11 determines a viewpoint position for a virtual camera, a direction of a visual axis, and a size of a visual angle in accordance with the control program, and carries out an initial setup for the virtual camera to execute perspective transformation (Step S103). Then, the processing flow proceeds to Step S119.

In the case where it is determined that the state does not becomes timing to change the scene because the state is during execution of the game ("No" at Step S101), the control section 11 confirms whether a gambit flag, which indicates presence or absence of use of the gambit (the gambit will be described in detail later), is set to "ON" or not (Step S104). In the case where it is confirmed that the gambit flag is "ON" ("Yes" at Step S104), the control section 11 carries out a gambit battle action determining process in order to determine an action for the player character in a battle in accordance with a setting state of the gambit (Step S105). In this regard, the gambit battle action determining process will be described in detail later. In the case where it is confirmed that the gambit flag is "OFF" ("No" at Step S104), the processing flow proceeds to Step S108.

When the gambit battle action determining process is terminated, the control section 11 carries out a battle process in accordance with the action for the player character in a battle determined by the gambit battle action determining process (Step S106). In the battle process, the control section 11 carries out, for example, a process to determine a battle result and/or battle development between an enemy character (a non-player character against whom the player character battles) and the player character, and the like.

Subsequently, the control section 11 generates battle information on the basis of the battle result and/or battle development determined by the battle process at Step S106 (Step S107). Namely, in accordance with the battle result and/or battle development by the battle process, the control section 11 updates and sets necessary information among the name of the player character who battles an enemy character, the name of the enemy character, the battle development, the battle result, a parameter that defines the ability of the player character, and the like. The battle information includes various kinds of information on the battle such as the name of the player character who battles an enemy character, the name of the enemy character, the battle development, the battle result, and a parameter that defines an ability of the player character.

Subsequently, the control section 11 receives instruction data in accordance with an operation of the input section 21 by the player (Step S108). Namely, the control section 11 determines whether instruction data for executing movement of the player character or the like has been input from the input section 21. In the case where effective instruction data (that is, it means that such effective instruction data is instruction data allowed to be received by the control section 11) is input, the control section 11 receives the effective instruction data.

In the case where the control section 11 receives instruction data for instructing an action of the player character regarding the movement of the player character (that is, the movement instruction data: movement instruction by a movement command or the directional instruction key) in accordance with the operation of the input section 21 at Step S108 regarding the movement of the player character (movement operation) ("Yes" at Step S109), the control section 11 executes a movement process in accordance with the movement instruction data thus received (Step S110). In the movement process, the control section 11 moves the position of the player character in a virtual space (on the presently displayed field) in accordance with the received movement instruction data. In this regard, such a movement command may include, for example a dash instruction command. The dash instruction command is a command that causes the player character to move quickly, and a command for supplying an instruction so that the player character goes away (or runs away) from a battle area quickly when the player character is in a melee, for example.

Subsequently, the control section 11 generates movement information on the basis of the position information of the player character derived along with the movement process (Step S111). Namely, in accordance with the movement of the position of the player character by means of the movement process, the control section 11 updates necessary data among data on the viewpoint position of the virtual camera, data on the direction of a visual axis, and data on the size of a visual angle, and changes the setting content of the virtual camera. The movement information includes various kinds of information on the movement such as the viewpoint position of the virtual camera, the direction of the visual axis, and the size of the visual angle changed along with the position of the player character after the movement and the movement of the player character. Then, the processing flow proceeds to Step S117.

In the case where the control section 11 receives instruction data for instructing an action regarding a battle (that is, battle instruction data: a battle command) in accordance with an operation of the input section 21 for instructing an action of the player character regarding the battle (battle operation) at Step S108 ("NO" at Step S109 and "Yes" at Step S112), the control section 11 executes a battle process in accordance with the received battle instruction data (Step S113). In the battle process, the control section 11 executes, for example, a process to determine a battle result and/or battle development between an enemy character (a non-player character against which the player character battles) and the player character, and the like.

Subsequently, the control section 11 generates battle information on the basis of the battle result and/or battle development determined by means of the battle process at Step S113 (Step S114). At Step S114, a process similar to that at Step S106 described above is carried out. Then, the processing flow proceeds to Step S117.

In this regard, in the case where the battle information has already been generated at Steps S106 and S107, this battle information is canceled (or deleted) and the battle information generated at Step S114 is used. Namely, action contents determined on the basis of battle instruction data in response to an operation of the input section 21 by the player or the like are given priority by the action content determined on the basis of the gambit. Thus, the processes at Steps S104 to S107 are carried out after the processes at Steps S112 to S114 of the main process. In the case where the battle instruction data are received, the processes at Steps S104 to S107 may not be carried out.

In the case where the control section 11 receives instruction data for another instruction (that is, other instruction data: other command) in accordance with the operation of the input section 21 for executing another instruction (other operation) at Step S108 ("No" at Step S109, "No" at Step S112 and "Yes" at Step S115), the control section 11 executes a process (for example, conversation, purchase, pick up or the like) in accordance with the other instruction data thus received (Step S116). The other information corresponding to the process result at Step S116 is then generated, and the processing flow proceeds to Step S117. On the other hand, in the case where the control section 11 does not receive instruction data for another instruction (other operation) ("No" at Step S115), the control section 11 carries out the display process at Step S119.

The control section 11 updates the current position of the player character by storing the movement information generated at Step S111 in a predetermined data area of the RAM 12 at Step S117. Further, the control section 11 memorizes and stores various action histories for the player character by storing the battle information generated at Step S107 or Step S114 and the other information generated after Step S116 in a predetermined data area of the RAM 12 at Step S117.

Subsequently, the control section 11 executes an action estimate process on the basis of information indicating the action histories of the player character once stored in the RAM 12 (Step S118). More specifically, information required to be digitized is digitized using conversion tables prepared in advance, and with respect to information required to be weighted, a score is calculated by multiplying predetermined numerical values and summing these multiplied numerical values. The calculated score is added to a previous score stored in a predetermined data area of the RAM 12, and the added score is again stored in the predetermined data area, by which the score is updated as estimate information.

Then, the control section 11 perspectively transforms the virtual three-dimensional space including the player character and the non-player characters to be displayed from the virtual camera onto the virtual screen in accordance with setting content of the virtual camera and/or the current position information updated at Step S117, and carries out a display process to generate a two-dimensional image to be displayed on the image display screen 51 (Step S119). When the display process is terminated, this main process is terminated. Then, when timer interruption is generated at timing of the start of a next frame period, a next main process is again carried out. By repeatedly carrying out the main process, a character image is switched every frame period, and a moving image (animation) is displayed on the image display screen 51.

Now, the display process at Step S119 will be simply described. At Step S119, the control section 11 first transforms at least the coordinates of the vertexes of respective polygons included within a range to be perspectively transformed on the virtual screen among the coordinates of the vertexes of polygons constituting the virtual three-dimensional space in which the player character and the non-player characters are included from the coordinates of the world coordinate system to the coordinates of the viewpoint coordinate system. Subsequently, the control section 11 transmits the coordinates of the vertexes of polygons of the player character and the non-player characters in the viewpoint coordinate system to the graphics processor 15, thereby outputting a graphics command to the graphics processor 15.

When the graphics command is input, the graphics processor 15 updates, on the basis of the coordinates of the viewpoint coordinate system, the contents of the Z buffer so that data on the points which reside at the front side are retained with respect to points constituting each surface. When the contents of the Z buffer are updated, the graphics processor 15 develops image data on the points which reside at the front side on the frame memory 19. Further, the graphics processor 15 carries out some processes such as a shading process and a texture mapping process with respect to the developed image data.

Then, the graphics processor 15 in turn reads out the image data developed on the frame memory 19, and generates video signals by adding synchronization signals to the image data to output the video signals to the display device 50. The display device 50 displays an image corresponding to the video signals output from the graphics processor 15 on the image display screen 51. By switching images displayed on the image display screen 51 every single frame period, the player can see moving images including the state in which the player character and/or the non-player characters are moved on the field.

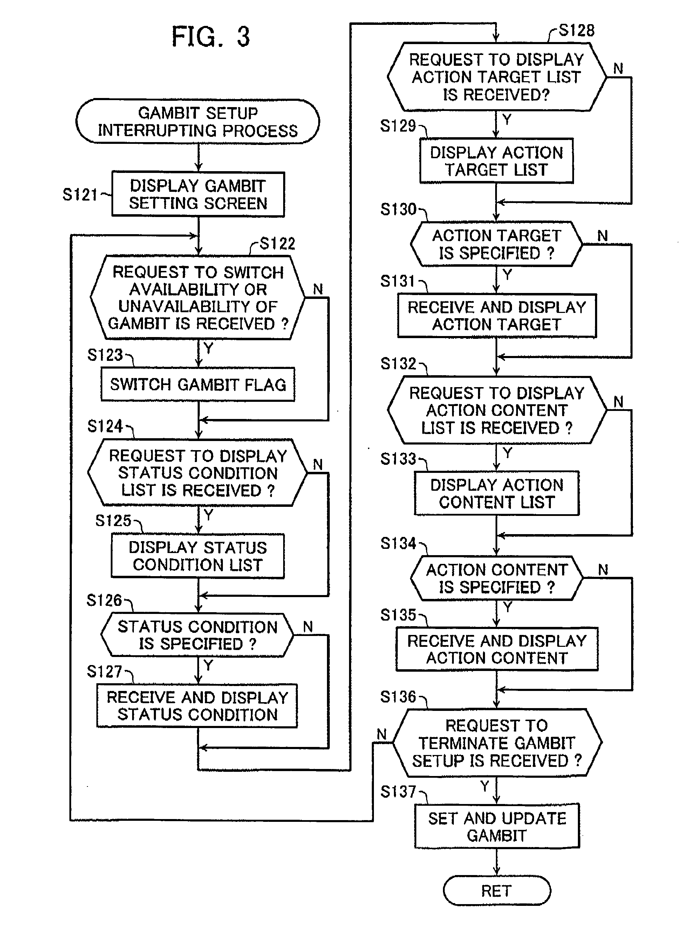

Next, a gambit setup interrupting process (Step S116) that may be executed by the video game apparatus 100 of the present embodiment will be described. FIG. 3 is a flowchart that illustrates an example of the gambit setup interrupting process. The gambit setup interrupting process is a process in which the control section 11 sets a gambit for each of multiple player characters in a game in response to an operation of the input section 21 by the player. The gambit setup interrupting process interrupts the main process described above to be carried out in accordance with a predetermined operation of the input section 21 by the player (instruction operation to set a gambit). Here, the case where a gambit for a player character A is set will be described as an example.

Now, the "gambit" will be described. The "gambit" means character action information set in advance by the player in order to determine an action that is to be carried out by the corresponding player character during a battle (such as attack, defense and recovery). The "gambit" is constituted from a combination of an action condition and an action content. In a state where a gambit is set, in the case where an action condition in the gambit is met when it becomes predetermined action determining timing (for example, when an action of a previous battle is terminated and a charge time (CT) becomes 0 %), an action content and an action target are determined on the basis of the gambit. Then, when it becomes predetermined action executing timing (for example, when the CT becomes 100 %), the determined action content is carried out against the determined action target as previously set in the gambit setup process.

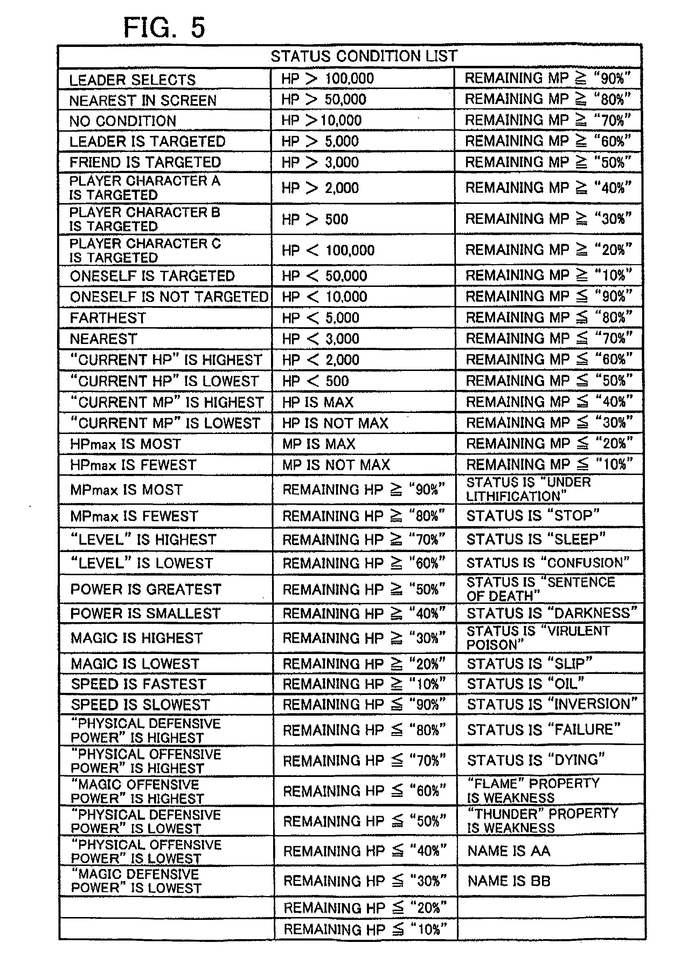

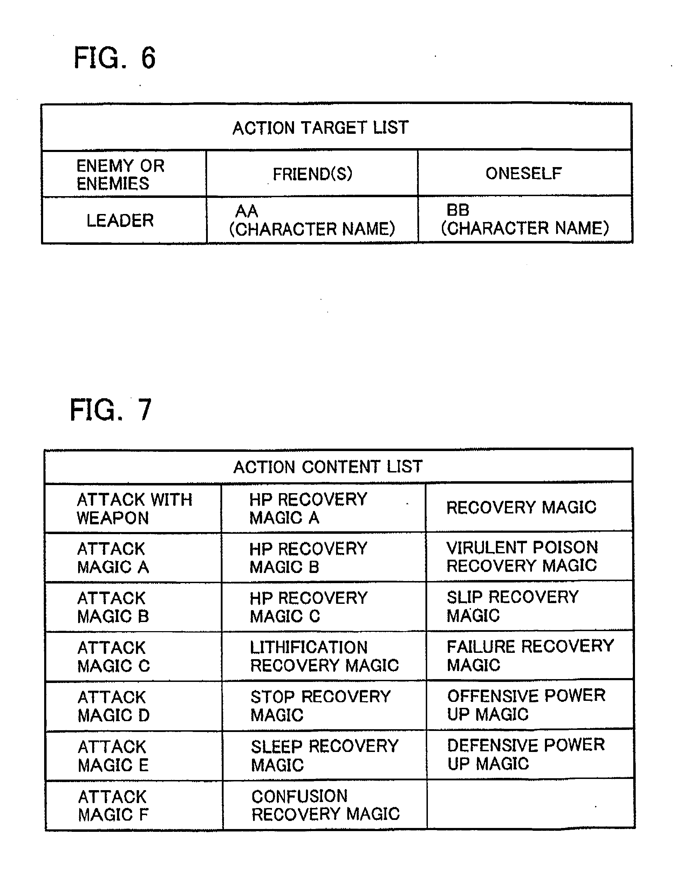

The "action condition" means a condition of an action target that is to be an executed target of the action content. The "action condition" may be constituted from a combination of a status condition and an action target (as illustrated, for example, in FIG. 4). The "status condition" means a condition of a status where the action target to be the executed target of the action content is put (more specifically, see FIG. 5, for example). Further, the "action target" means a target against which an action content is to be executed (more specifically, see FIG. 6, for example).

The "action content" means a concrete content of an action that is to be carried out when a corresponding action condition is met. In the present embodiment, the "action content" is a content of a concrete action such as attack, defense and recovery that the player character will be caused to carry out. Thus, in the case where an action condition in a gambit is met, an action content itself, which corresponds to an action condition, will be carried out without any need of a player (user) to determine (or select) a concrete action content from action contents that correspond to the action condition.

In the gambit setup interrupting process, the control section 11 first causes the display device 50 to display a gambit setup screen of a player character A specified by a predetermined operation of the input section 21 by the player on the image display screen 51 (Step S121). The gambit setup screen is, for example, a screen that a player (user) uses to set up a gambit for each of multiple player characters, and which is prepared for each of the multiple player characters, for example. At Step S121, for example, the gambit setup screen, in which a setup content of a current gambit for the corresponding player character is indicated, is displayed. In this case, for example, it is determined at Step S121 for which player character a gambit setup screen is to be displayed on the basis of a predetermined operation of the input section 21 by the player, and the gambit setup screen for the determined player character is then displayed on the image display screen 51.

FIG. 4 is an explanatory drawing that shows an example of a gambit setup screen displayed on an image display screen by the process at Step S121. In FIG. 4, a setup screen is shown that the player may use to set up a gambit for a player character A within multiple player characters by an operation of the input section 21.

As shown in FIG. 4, a gambit setup screen may include a switching button 511, which causes the gambit to switch between an available state (the gambit ON) and an unavailable state (the gambit OFF) (gambit available/unavailable switching button 511), a gambit setup region 512 to allow the player to set the gambit, and a gambit setup end button 516 that is to be actuated on (for example, by using a cursor) when a setup of the gambit is terminated are provided in the gambit setup screen.

Multiple setup regions for respectively setting multiple gambits (for example, a gambit for each of gambit numbers 1 to 7) are provided in the gambit setup region 512. In each of the gambits, a status condition setup region 513 (for example, to be used by the player) for setting a status condition, an action target setup region 514 (for example, to be used by the player) for setting an action target, and an action content setup region 515 (for example, to be used by the player) for setting an action content are provided. In this regard, an order of priority is defined for each of the multiple gambits which will be used to determine an action content and the like. In this example, the smaller a gambit number for a gambit is, the higher priority the corresponding gambit will have.

In the example shown in FIG. 4, the player is allowed to set up to 7 pieces of gambits (that is, gambit numbers 1 to 7) in accordance with progress of the game and the like. In the illustrated example of FIG, 4, the player is currently allowed to set up 5 pieces of gambits (for example, gambit numbers 1 to 5).

In the present embodiment, for example, in exchange for a privilege that the player acquires in accordance with the progress of the game (for example, a score, an item and money), a settable gambit may be newly supplied for the player character, whereby the number of settable gambits is increased. The upper limit number of settable gambits has been provided simply as an illustrative example in describing an aspect of the present invention, but the number of gambits may be set to any number, and an upper limit number of settable gambits may not be provided. Further, a different upper limit number of settable gambits may be provided for each of the player characters . Alternatively, the upper limit number of settable gambits for each of the player characters it may be the same number.

When the gambit setup screen is displayed, the control section 11 carries out processes at Steps S122 to S137, which will be described in detail later in response to an operation of the input section 21 by the player.

More specifically, when the gambit available/unavailable switching button 511 is actuateded by an operation of the input section 21 and a request to switch availability or unavailability of gambit is received ("Yes" at Step S122), the control section 11 switches a status of a gambit flag (Step S123). However, in the case where the switching button 511 is not actuated ("No" at Step S122), the control section 11 causes the process to proceed to Step S124. At Step S123, in the case where the request to switch the gambit to ON (available) is received, a process to set the gambit flag to ON is carried out. On the other hand, in the case where the request to switch the gambit to OFF (unavailable) is received, a process to set the gambit flag to OFF (that is, a process to reset the gambit flag thereof) is carried out.

Further, when a request to display a status condition list is received in response to an operation of the input section 21 ("Yes" at Step S124), the control section 11 causes the display device 50 to display the status condition list in the form of a pull-down menu (drop-down menu), for example (Step S125). However, in the case where a request to display a status condition list is not received ("No" at Step S124), the control section 11 causes the process to proceed to Step S126. The request to display a status condition list is input to the control section 11 by actuating a pull-down (drop-down) menu development button that is provided in the status condition setup region 513 (for example, a portion where an inverted triangle is displayed, which is provided at each of status condition setup regions 513 corresponding to the respective gambit numbers shown in FIG. 4).

In the status condition list, for example, as shown in FIG. 5, various status condition candidates such as "a leader selects", "HP > 100,000", and "remaining MP ≥ 90%" are registered in advance. The status condition list is stored in the storage medium 70, and is read out on the RAM 12 to be used.

In this regard, at Step S125, a status condition list for each character constituted from only status conditions that can be set in the gambit for the player character A may be displayed. In this case, the control section 11 may create a status condition list for each character from a global status condition list in which all of the possible status conditions that can be set for any one of the player characters are registered, and cause the display device 50 to display the created status condition list for each character on the image display screen 51. Further, the number of status conditions that can be set in the gambit for the player character A is allowed to increase in exchange for privileges that are supplied to the player character A in accordance with progress of the video game (for example, score, item and money). A group or list of the possible status conditions that may be set in a gambit for each of the player characters is stored in the RAM 12, for example.

When the status condition list is displayed, the player selects a desired status condition that is to set from the status conditions on the status condition list by an operation of the input section 21. Alternatively, the player may input a desired status condition that is to be set in the status condition setup region 513, without using the status condition list by an operation of the input section 21.

When the desired status condition to be to set is specified (or selected, or input) by an operation of the input section 21 ("Yes" at Step S126), the control section 11 receives the specified status condition, and causes the display device 50 to display it in the status condition setup region 513 of the corresponding gambit number (Step S127). On the other hand, when the status condition is not specified ("No" at Step S126), then the control section 11 causes the process to skip Step S127 and proceed to Step S128.

Further, when a request to display an action target list is received in response to an operation of the input section 21 by the player ("Yes" at Step S128), the control section 11 causes the display device 50 to display the action target list in the form of a pull-down (drop-down) menu, for example (Step S129). When the result is "No" at Step S128, the control section 11 causes the process to skip Step S129 and proceed to Step S130. The request to display an action target list is input to the control section 11 by actuating a pull-down (or drop-down) menu development button that is provided in the action target setup region 514 (for example, a portion where an inverted triangle is displayed, which is provided at each of action target setup regions 514 corresponding to the respective gambit numbers shown in FIG. 4).

In the action target list, for example, as shown in FIG. 6, various action target candidates such as "enemy" or "enemies", "friend(s)", and "oneself" are registered in advance. The action target list is stored in the storage medium 70, and is read out in the RAM 12 to be used.

When the action target list is displayed, the player selects a desired action target that is to be set from the action targets on the action target list by an operation of the input section 21. Alternatively, the player may input an action target, which is to be set in the action target setup region 514, without using the action target list by an operation of the input section 21.

When the desired action target that is to be set is specified (or selected, or input) by an operation of the input section 21 ("Yes" at Step S130), the control section 11 receives the specified action target, and causes the display device 50 to display it in the action target setup region 514 of the corresponding gambit number (Step S131). On the other hand, when no desired action target is specified ("No" at Step S130), the control section 11 causes the process to skip Step S131 and proceed to Step S132.

Further, when a request to display an action content list is received in response to an operation of the input section 21 ("Yes" at Step S132), the control section 11 causes the display device 50 to display the action content list in the form of a pull-down (drop-down) menu, for example (Step S133). On the other hand, in the case where a request to display an action content list is not received ("No" at Step S132), the control section 11 causes the process to skip Step S133 and proceed to Step S134. The request to display an action content list is input to the control section 11 by actuating a pull-down (or drop-down) menu development button that is provided in the action content setup region 515 (for example, a portion where an inverted triangle is displayed, which is provided at each of action content setup regions 515 corresponding to the respective gambit numbers shown in FIG. 4);

In the action content list, for example, as shown in FIG. 7, various action content candidates indicating concrete action contents such as "attack with a weapon", "attack magic A", and "HP recovery magic A" are registered in advance. The action content list is stored in the storage medium 70, and is read out in the RAM 12 to be used.

In this regard, at Step S133, an action content list may be displayed for each character constituted from only action contents that the player character A can carry out. In this case, the control section 11 may create the action content list for each character from the action content list, and cause the display device 50 to display the created action content list for each character on the image display screen 51.

When the action content list is displayed, the player selects a desired action content that is to be set from the action contents in the action content list by an operation of the input section 21. Alternatively, the player may input a desired action content that is to be set in the action content setup region 515, without using the action content list by an operation of the input section 21.

When the desired action content that is to be set is specified (or selected, or input) by an operation of the input section 21 ("Yes" at Stop S134), the control section 11 receives the specified action content, and causes the display device 50 to display it in the action content setup region 515 of the corresponding gambit number (Step S135). On the other hand, when an action content is not specified ("No" at Step S 134), the control section 11 causes the process to skip Step S135 and proceed to Step S136.

By repeatedly carrying out the processes at Steps S122 to S135 as described above, the content of each gambit is received with respect to each of the settable gambit numbers, and it is displayed in the gambit setup region 512. In this case, for example, only a portion of the possible gambits may be received among the multiple gambits that are made to be settable.

When the gambit setup end button 516 is actuated by an operation of the input section 21 and a request to terminate the gambit setup is received after receiving the contents for the respective gambits ("Yes" at Step S136), the control section 11 determines that the respective gambits are set to the received contents, and sets (or newly sets, updates) the contents for the received gambits in the RAM 12 (Step S137). Here, at Step S137, the respective gambits of the gambit numbers 1 to 5 as shown in FIG. 4 are set in the RAM 12 as the gambits for the player character A. On the other hand, in the case where a request to terminate a gambit setup is not received ("No" at Step S136), then the control section 11 causes the process to proceed to Step $122.

The gambits for the player character A, for example, may be set in this way. In the present embodiment, an order of priority may be assigned to each of the gambits in the order of the gambit numbers as described above. Namely, as will be described later, an action for a corresponding player character may be determined in accordance with the setup content of the gambit having a smallest gambit number among multiple gambits that meet the action condition. Thus, the player may set a gambit that includes an action content having higher priority, which the player character is to carry out, to a gambit number having a higher priority (that is, a lower gambit number). However, the example described herein is provided for illustrative purposes and the skilled artisan will readily recognize that any system of prioritizing action contents and/or conditions may be used without departing from the spirit or scope of the present invention.

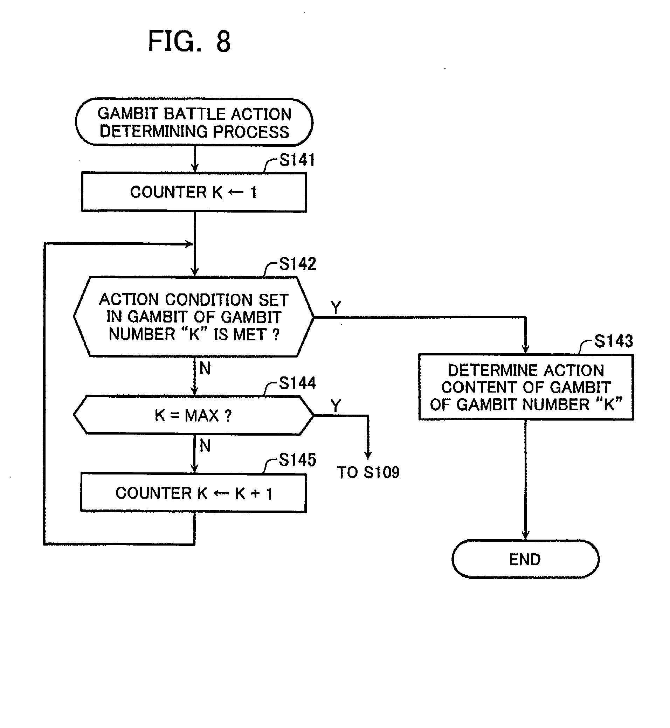

Next, a gambit battle action determining process (Step S105) in the video game apparatus 100 of the present embodiment will now be described. FIG. 8 is a flowchart that illustrates an example of a gambit battle action determining process in the video game apparatus 100 of the present embodiment. Here, a gambit is set, for example, according to the settings shown in FIG. 4.

In the gambit battle action determining process, the control section 11 first sets an initial value "1" to a counter K (Step S141). The counter K is a counter in which the value "K" of the counter indicates a gambit number for a gambit that is to be referenced.

Subsequently, the control section 11 determines whether an action condition in the gambit whose gambit number is "K" is met or not (Step S142). Namely, the control section 11 determines whether an action target indicated by the gambit whose gambit number is "K", in which the status condition thereof is met, exists or not. For example, in the case where the value of the counter K is "1", the control section 11 determines whether any friend whose remaining HP is 50 % or less exists or not. Further, for example, in the case where the value of the counter K is "2", the control section 11 determines whether any enemy who targets a leader exists or not. Moreover, for example, in the case where the value of the counter K is "3", the control section 11 determines whether any attackable enemy whose current position is nearest from the corresponding player character exists in the characters displayed in the image display screen 51 or not. Furthermore, for example, in the case where the value of the counter K is "4", the control section 11 determines whether any friend whose status effect is "under lithification" exists or not. Further, for example, in the case where the value of the counter K is "5", the control section 11 determines whether any friend whose status effect is "sleep" exists or not.

In the case where it is determined that the action condition in the gambit of the gambit number "K" is met ("Yes" at Step S142), the control section 11 determines that the action content in the gambit of the gambit number "K" is to be carried out against the action target indicated by the gambit of the gambit number "K" (Step S143). Then, the gambit battle action determining process is terminated without carrying out determination with respect to gambit(s) whose gambit number is lower than the gambit number "K".

On the other hand, in the case where it is determined that the action condition in the gambit of the gambit number "K" is not met ("No" at Step S142), the control section 11 determines whether the value of the counter K is a maximum value of the set gambit number "K" or not (Step S144). In the case
where it is determined that the value of the counter K is not the maximum value ("No" at Step S144), the control section 11 adds one to the value of the counter K (Step S145), and causes the processing flow to return to Step S142, On the other hand, in the case where it is determined that the value of the counter K is the maximum value ("Yes" at Step S144), the processing flow proceeds to Step S109 described above without determining the action content and the like of the player character.

As described above, it is determined whether an action condition in a gambit is met or not in order of a gambit number, and it is determined that an action content corresponding to the action condition is carried out against an action target included in the action condition in the case where it is determined that the action condition is met. In this regard, in the case where a gambit whose action condition is met is not set, an action content and the like of a player character is not determined in the gambit battle action determining process.

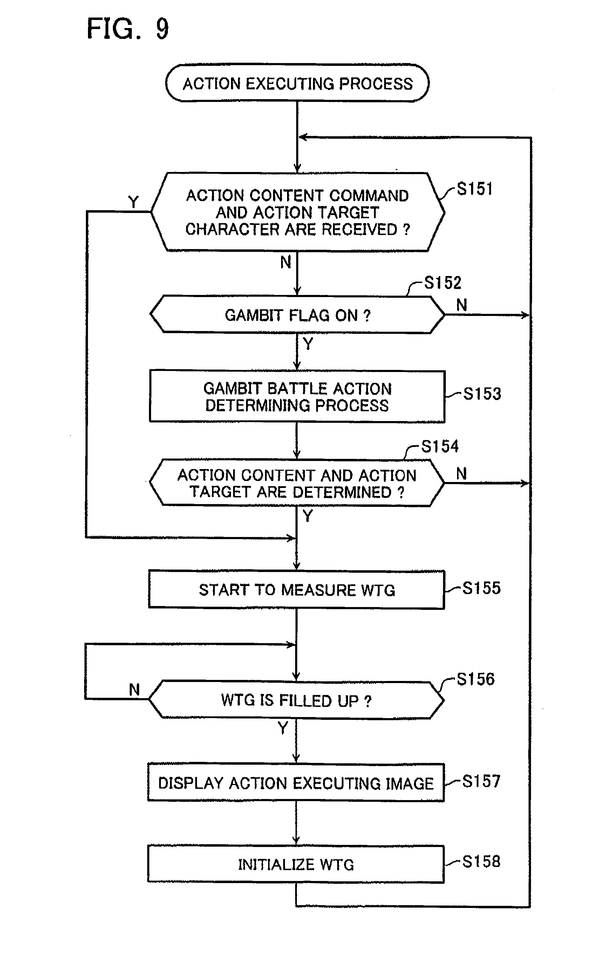

Next, an action executing process in the video game apparatus 100 of the present embodiment will now be described. FIG. 9 is a flowchart that illustrates an example of an action executing process in the video game apparatus 100. The action executing process illustrated in FIG. 9 may be realized by repeatedly executing the main process as described above. Here, in the main process, the processes at Steps S104 to S107 are carried out after the processes at Steps S112 to S114, and the processes at Steps S104 to S107 are not carried out in the case where battle instruction data is received.

In the action executing process, the control section 11 first determines whether an action content command, which indicates an action content for a battle such as attack, defense and recovery (except for an action content such as movement) and an action target character are received or not (Step S151). The action content command is a concept including a movement command, a battle command, and other command as the skilled artisan will readily recognize without departing from the spirit or scope of the present invention. Here, a battle command for a battle such as attack, defense or recovery is received at Step S151. The battle command is a command specifying the kind of action (for example, attack, defense, recovery and the like) and the content of the action (for example, attack with a sword, defense with a shield, recovery by medicine). The action target character is specified by the battle command. In this regard, the process at Step S151 corresponds to that at Step S108 in the main process. In the case where an action content command indicating an action content for a battle and an action target character have been received ("Yes" at Step S151), the processing flow proceeds to Step S155. Namely, in the case where the action content and the action target are specified by the player and the action content and the action target are determined, the processing flow proceeds to Step S155.

On the other hand, in the case where an action content command indicating an action content for a battle and an action target character have not been received ("No" at Step S151), the process proceeds to Step S152. At Step S152, in the case where a gambit flag is in an "ON" state when an action content command has not been received yet ("No" at Step S151 and "Yes" at Step S152), the control section 11 carries out the gambit battle action determining process (Step S153, that is, the process at Step S105 as described above). In the case where the gambit flag is determined to be in an "OFF" state ("No" at Step S152), then the process returns to Step S151. On the other hand, in the case where the action content and the action target are determined in the gambit battle action determining process ("Yes" at Step S154), the processing flow proceeds to Step S155; otherwise("No" at Step S154), the processing flow returns to Step S151.

When the action content and the action target are determined ("Yes" at Step S154), the control section 11 starts to measure time using, for example, a wait time gauge (WTG: a gauge for measuring time until an action can be carried out) (Step S155). A supplementary action may be carried out while the time measurement is carried out. The supplementary action may include an action such as movement of the player character (movement to approach a region where an effect of an action such as attack can be obtained (for example, within a range of the attack).

When a scale of the WTG is filled up (that is, a charge time (CT) becomes 100 %) ("Yes" at Step S156), the control section 11 and the graphics processor 15 carry out a control process to display an action executing image in which the determined action content is executed against the determined action target or to cause the state of the game to update on the basis of the action (such as update of the remaining hit points (HP) and the remaining magic points (MP) of each of the characters, update of an experience value and the like) (Step S157). For example, an action executing image may be displayed indicating a state where the player character attacks an enemy character with a sword. On the other hand, when a determination is made that the WTG has not reached the predetermined maximum value (the WTG has not filled up) ("No" at Step S156), the control section 11 causes the process to repeat Step S156.

When a display of the action executing image and the update of the state of the game by the action are carried out, the control section 11 initializes the WTG (Step S158). Then, the processing flow proceeds to Step S151.

As explained above, in the embodiment described above, the apparatus is constructed so that the action content of the character and the action target are determined automatically and specifically using the gambit (character action information) that corresponds to an action condition including the action target of the character and the action content for the character. Therefore, it is possible to easily and accurately set details regarding an action for each character, thereby making it possible to heighten a user's interest in the game. Namely, by setting a combination of an action condition and an action content, it is possible to easily and accurately set details regarding an action for each character. Further, since the details regarding an action for a corresponding character may be easily and accurately set by setting a gambit, it becomes possible to cause the character to carry out an action that a player intends, thereby making it possible to heighten a user's (player's) interest in the game.

Further, the apparatus is constructed so that the action content of the character and the action target are automatically and specifically determined using multiple gambits, each of which is assigned a order of priority. Thus, it becomes possible to easily set an accurate action for a character in accordance with progress of the game. Further, it becomes possible to cause the character to automatically carry out the action that the player intends in accordance with the progress of the game. This makes it possible to heighten a user's (player's) interest in the game.

For example, by setting gambits for an action condition and an action content for recovery or defense of a friend character to have a high priority and setting gambits for an action condition and an action content for attack on an enemy character to have a low priority, it becomes possible to set the action condition and the action content in advance so that the character will carry out a battle with caution. Further, by setting gambits for an action condition and an action content for attacking a relatively strong enemy character to have a high priority and setting gambits for an action condition and an action content for attacking a relatively weak character to have a low priority, it becomes possible to set the action condition and the action content in advance so that attack will be carried out against the stronger enemy character by priority. Namely, by appropriately setting multiple gambits, it becomes possible to cause the player character to act as the player intends without instruction by the player for actions point by point. In the present embodiment, since the game proceeds on a common field in which various actions including, for example, the movement of the player character and a battle by the player character are allowed, it becomes possible to carry out an action such as attack, defense and recovery that the player intends by simply carrying out only an operation to move the player character, thereby making it possible for the game to proceed smoothly.

Moreover, in one embodiment described above, the video game apparatus is constructed so that a settable gambit is newly supplied to a player in exchange for a privilege that the player has acquired in accordance with progress of a game (for example, score, item and money), whereby the number of settable gambits for each player character is increased. Thus, it becomes possible to increase the number of settable gambits in accordance with the process of the game, and it becomes possible to accurately set the action for the character in more detail in accordance with the progress of the game. In this regard, a settable gambit may be newly supplied to the player as a privilege without the player having to exchange a privilege for a new gambit (for example, a new "gambit" is entered into a treasure box). Further, the number of settable gambits may be set to a fixed number.

Furthermore , in one embodiment described above , the video game apparatus is constructed so that the kinds of settable status conditions may be increased on the basis of a privilege that is supplied to the player character in accordance with the progress of the video game (for example, score, item and money). Thus, it becomes possible to increase the kinds of settable status conditions in accordance with process of the game, and it becomes possible to accurately set the action for the character in more detail in accordance with the progress of the game. In this regard, a settable status condition may be newly supplied to the player character as a privilege without the player character having to exchange any privilege to obtain a new gambit (for example, any of various status conditions such as "remaining HP ≥ 50 %" is entered into a treasure box). Further, the number of settable status conditions may be set to a fixed number. Moreover, in a similar manner to the status conditions, the video game apparatus may be constructed so that the kinds of action targets and/or action contents settable in a gambit are increased on the basis of a privilege or the like that is supplied to the player character in accordance with the progress of the video game.

Further, in one embodiment described above, the video game apparatus may be constructed so that a gambit is set for each of the multiple player characters including, for example, a main player character (leader) and one or more sub player character (which is a friend character of the main player character) whose action is directly instructed by the player. Thus, it is possible to easily and accurately set details regarding an action for each of the multiple player characters, thereby making it possible to heighten a user's interest in the game.

In this regard, in one embodiment described above, although a game proceeds on a common field in which various actions including the movement of the player character and a battle by the player character are allowed, a battle field in which a battle is carried out and a movement field in which the movement of the player character is carried out may be provided separately.

Moreover, although the video game apparatus main body 10 and the display device 50 are constructed from separate components in the embodiment described above, the display device 50 may be incorporated in the video game apparatus main body 10.

Furthermore, although the game control for the RPG has been explained in the embodiment described above, the technique of the present invention may be applied to other kinds of video games where a battle is carried out by multiple action patterns without departing from the spirit or scope of the present invention.

Further, although an aspect of the present invention has been explained with the video game apparatus 100 as an example in the embodiment described above, the present invention is not limited thereto. The present invention can be applied to various apparatuses such as a personal computer, a cellular phone terminal, a portable game apparatus or any other medium or device includes an image generating function. In this regard, in the case where the present invention is applied to a portable game apparatus or the like, a small-sized storage medium such as a semiconductor memory card may be used as the storage medium 70 described above in place of a CD-ROM or DVD-ROM.

Moreover, in the embodiment described above, although it has been described that game data and code for causing the video game apparatus main body 10 (video game apparatus 100) to carry out various processes described above (that is, various data such as control program data used for the game) are stored in the storage medium 70, the game data may be delivered to a player's device by a server apparatus such as a world wide web (WWW) server. In this case, the video game apparatus main body 10 may obtain the game data delivered by the server apparatus via the communication network 80, and store the game data in the HDD 13. The game data may be used by loading the data into the RAM 12 from the HDD 13. In this regard, although examples of the game data have been explained in the above example, the examples are non-limiting and the game data may further include such data as, for example, inter alia, control program data for making a computer to carry out the image generating process in the embodiment as described above.

The present invention may be applied to a video game machine, a personal computer, a cellular phone terminal, a portable game apparatus or any other device or medium that is capable of generating, or causing to be generated, a perceivable image of a player character and controlling the progress of a video game by controlling an action of the player character displayed on the image display screen in response to an operation by a player. Therefore, the present invention is useful.

## Claims

1. An apparatus for causing an image display apparatus to display a player character of a video game and for controlling progress of the video game by controlling an action of the player character, the apparatus comprising:
a character action information receiver that receives character action information in which an action condition, including an action target of the player character, corresponds to an action content of the player character;
a character action information setter that sets the character action information received by the character action information receiver;
an action content determiner that determines an action content to be carried out by the player character in accordance with the character action information set by the character action information setter; and
an action content executer that causes the player character to carry out the action content determined by the action content determiner,
wherein the action content determiner determines whether an action condition indicated by the character action information is met, and
in the case where the action condition is met, the action content determiner determines an action content to be carried out by the player character against the action target, the action content corresponding to the action condition.

2. The apparatus according to claim 1, wherein:
the character action information receiver receives multiple kinds of character action information, each kind of character action information being assigned an order of priority;
the character action information setter sets the multiple kinds of character action information for the player character on the basis of the assigned order of priority; and
the action content determiner determines an action content that is to be carried out by the player character, the action content being indicated by the character action information having the highest assigned priority and whose action condition is met.

3. The apparatus according to claim 2, further comprising:
an upper limit number memory that stores an upper limit number of settable character action information; and
an upper limit number incrementer that increments the upper limit number stored in the upper limit number memory on the basis of a privilege, the privilege being supplied to the player character in accordance with progress of the video game,
wherein the character action information receiver receives multiple kinds of character action information up to the upper limit number stored in the upper limit number memory.

4. The apparatus according to claim 1, wherein the action condition comprises a combination of the action target and a status condition indicating a condition of a current status of the action target, and
wherein the apparatus further comprises:
a status condition memory that stores at least one status condition receivable by the character action information receiver; and
a status condition incrementer that increments the status conditions stored in the status condition memory on the basis of a privilege that is to be supplied to the player character in accordance with progress of the video game.

5. The apparatus according to claim 4, wherein the status condition includes at least one of a residual amount and a maximum amount of hit points for the action target, a residual amount and a maximum amount of magic points for the action target, defensive power fox the action target, offensive power for the action target, and a status effect that influences the action target.

6. The apparatus according to claim 1, wherein the action target includes at least one of a main player character whose action is directly controlled in accordance with an operation by a player, at least one sub player character whose action is indirectly controlled in accordance with an operation by the player, and an enemy character.

7. The apparatus according to claim 1, wherein multiple player characters exist in the video game, and the character action information setter sets character action information for each of the multiple player characters, and the character action information receiver receives an action content to be allowed to each of the multiple player characters.

8. The apparatus according to claim 1, wherein the action content includes at least one of an attack on the action target with a tool, an attack on the action target with a magic, defense from an action by the action target, and a recovery of the action target.

9. The apparatus according to claim 1, wherein the video game includes a role playing game.

10. A method of processing a video game by causing an image display apparatus to display a player character of the video game on an image screen of the image display apparatus, and controlling progress of the video game by controlling an action of the player character to be displayed on the image screen in accordance with an operation by a player, the method comprising:
receiving character action information in which an action condition, including an action target of the player character, corresponds to an action content of the player character;
setting the received character action information;
determining whether an action condition indicated by the set character action information is met or not, and determining an action content to be carried out by the player character against the action target in the case where the action condition is met, the action content corresponding to the action condition; and
causing the player character to carry out the determined action content.

11. The method according to claim 10, further comprising:
receiving multiple kinds of character action information, each kind of character action information being assigned an order of priority;
setting the multiple kinds of character action information for the player character on the basis of the assigned order of priority: and
determining an action content that is to be carried out by the player character, the action content being indicated by the character action information having the highest assigned priority and whose action condition is met.

12. The method according to claim 11, further comprising:
storing an upper limit number of settable character action information;
incrementing the stored upper limit number on the basis of a privilege, the privilege being supplied to the player character in accordance with progress of the video game; and
receiving multiple kinds of character action information up to the stored upper limit number.

13. The method according to claim 10, wherein the action condition comprises a combination of the action target and a status condition indicating a condition of a current status of the action target, and
wherein the method further comprises:
storing at least one status condition; and
incrementing the stored status conditions on the basis of a privilege that is to be supplied to the player character in accordance with progress of the video game.

14. The method according to claim 13, wherein the status condition includes at least one of a residual amount and a maximum amount of hit points for the action target, a residual amount and a maximum amount of magic points for the action target, defensive power for the action target, offensive power for the action target, and a status effect that influences the action target.

15. The method according to claim 10, wherein the action target includes at least one of a main player character whose action is directly controlled in accordance with an operation by a player, at least one sub player character whose action is indirectly controlled in accordance with an operation by the player, and an enemy character.

16. The method according to claim 10, wherein the action content includes at least one of an attack on the action target with a tool, an attack on the action target with a magic, defense from an action by the action target, and a recovery of the action target.

17. The method according to claim 10, wherein the video game includes a role playing game.

18. A computer program product for processing a video game, progress of the video game being controlled by causing an image display apparatus to display a player character of the video game on an image screen of the image display apparatus, and controlling an action of the player character to be displayed on the image screen in accordance with an operation by a player, the computer program product causing a computer to execute:
receiving character action information in which an action condition, including an action target of the player character, corresponds to an action content of the player character;
setting the received character action information;
determining whether an action condition indicated by the set character action information is met or not, and determining an action content to be carried out by the player character against the action target in the case where the action condition is met, the action content corresponding to the action condition; and
causing the player character to carry out the determined action content.

19. The computer program product according to claim 18, further comprising:
receiving multiple kinds of character action information, each kind of character action information being assigned an order of priority;
setting the multiple kinds of character action information for the player character on the basis of the assigned order of priority; and
determining an action content that is to be carried out by the player character, the action content being indicated by the character action information having the highest assigned priority and whose action condition is met.

20. The computer program product according to claim 19, wherein the computer program product further causes the computer to execute:
storing an upper limit number of settable character action information;
incrementing the stored upper limit number on the basis of a privilege, the privilege being supplied to the player character in accordance with progress of the video game; and
receiving multiple kinds of character action information up to the stored upper limit number.

21. The computer program product according to claim 18.
wherein the action condition comprises a combination of the action target and a status condition indicating a condition of a current status of the action target, and
wherein the computer program product further causes the computer to execute:
storing at least one status condition; and
incrementing the stored status conditions on the basis of a privilege that is to be supplied to the player character in accordance with progress of the video game.

22. The computer program product according to claim 21,
wherein the status condition includes at least one of a residual amount and a maximum amount of hit points for the action target, a residual amount and a maximum amount of magic points for the action target, defensive power for the action target, offensive power for the action target, and a status effect that influences the action target.

23. The computer program product according to claim 18,
wherein the action target includes at least one of a main player character whose action is directly controlled in accordance with an operation by a player, at least one sub player character whose action is indirectly controlled in accordance with an operation by the player, and an enemy character.

24. The computer program product according to claim 18,
wherein the action content includes at least one of an attack on the action target with a tool, an attack on the action target with a magic, defense from an action by the action target, and a recovery of the action target.

25. The computer program product according to claim 18,
wherein the video game includes a role playing game.
